# EUROPEAN PATENT APPLICATION

(11) **EP 4 593 213 A1**
(43) Date of publication of application: **30.07.2025**
(21) Application number: 24221315.5
(22) Date of filing: 18.12.2024
(51) Int. Cl.: H01R 13/631, H01R 13/516

(54) **PLUG, ELECTRICAL CONNECTOR, BATTERY PACK AND ELECTRIC DEVICE**

(30) Priority: 29.01.2024 CN 202420220838 U
(71) Applicant: Nio Technology (Anhui) Co., Ltd, Hefei City, Anhui 230601 (CN)
(72) Inventor: YAO, Tingting, Shanghai, 201805 (CN); YAN, Chunxiao, Shanghai, 201805 (CN); ZHANG, Julin, Shanghai, 201805 (CN); ZHAO, Yefei, Shanghai, 201805 (CN); XU, Jielong, Shanghai, 201805 (CN)
(74) Representative: Vossius & Partner Patentanwälte Rechtsanwälte mbB

(57) **Abstract**

The disclosure provides a plug, an electrical connector, a battery pack, and an electric device, the plug including an insertion end and a tail end, and the insertion end being configured for connection with a socket. The direction from the insertion end to the tail end is a first direction, the plug includes a first housing and a high-voltage pin, and the high-voltage pin is disposed in a first through hole of the first housing. The high-voltage pin includes a high-voltage terminal and an insulated second housing, the high-voltage terminal being disposed in the second housing. The second housing is provided with a first limiting member and a second limiting member, the first limiting member being an elastic member, and an included angle α between the first limiting member and the first direction being an acute angle. A wall of the first through hole includes a first wall extending in the first direction and a second wall extending in a second direction, the first limiting member being engaged with the second wall, and the second limiting member being engaged with at least one of the first wall and the second wall.

## Description

### Technical Field

The disclosure relates to the field of connectors, and particularly provides a plug, an electrical connector, a battery pack and an electric device.

### Background Art

An electrical connector is a connecting bridge, is a basic component necessary for a complete system, and plays a very important role in electrical equipment. With the expansion of the application field of electrical equipment, the application environment of the electrical connector has also been expanded, for example, to a new energy vehicle.

The electrical connector is divided into a plug and a socket, which are plugged to complete an electrical connection. The electrical connector for a new energy vehicle is divided into a battery end (plug), a vehicle end (socket) and a station end, where the station end is an interface for charging a battery pack in a battery swap station.

The plug is complex in structure, the existing solution typically uses bolts and a cover plate to secure a high-voltage terminal assembly to a battery swapping connector housing, which is not conducive to product modularization, resulting in a low production efficiency.

### Summary

In order to solve the problems that existing plugs do not facilitate the modular production of products and are inefficient, the disclosure provides a plug for plugging with a socket, in which the plug includes an insertion end and a tail end, the insertion end is configured to be connected to the socket, and the direction from the insertion end to the tail end is a first direction, the plug including a first housing and a high-voltage pin disposed in a first through hole of the first housing; where the high-voltage pin includes a high-voltage terminal and an insulated second housing, the high-voltage terminal being disposed in the second housing, the second housing being provided with a first limiting member and a second limiting member, the first limiting member being an elastic member, and an included angle α between the first limiting member and the first direction being an acute angle; and a wall of the first through hole includes a first wall extending in the first direction and a second wall extending in a second direction, the first limiting member being engaged with the second wall, and the second limiting member being engaged with at least one of the first wall and the second wall. So when the high-voltage pin is inserted from the tail end to the insertion end (i.e., the direction opposite to the first direction), under the pressing of the second wall, the first limiting member serving as an elastic member converges toward the axial center of the high-voltage pin to reduce α, and an elastic deformation is released when a top end of the first limiting member moves to a lower surface of the second wall, so that the first limiting member is engaged with the lower surface of the second wall, thereby limiting the movement in the first direction. The second limiting member 1422 is engaged with at least one of the first wall and the second wall, thereby limiting the movement in a direction opposite to the first direction. Therefore, the high-voltage pin and the first housing may be separately prepared, and then the high-voltage pin may be quickly mounted into the first housing, thereby simplifying the structure of the plug and also improving the production efficiency.

In an optional technical solution of the disclosure, the included angle α between the first limiting member and the first direction satisfies: 12° ≤ α ≤ 20°.

In an optional technical solution of the disclosure, a joint between the second limiting member and the second housing is closer to the tail end than a joint between the first limiting member and the second housing.

In an optional technical solution of the disclosure, the second housing includes a first segment and a second segment connected in the first direction, the first segment having a diameter greater than the diameter of the second segment, the first limiting member being connected to the first segment, and the second limiting member being connected to the second segment.

In an optional technical solution of the disclosure, the second housing is injection molded around the high-voltage terminal.

In an optional technical solution of the disclosure, a length L of the second wall satisfies: 0.7 mm ≤ L ≤ 1.5 mm.

In an optional technical solution of the disclosure, the first housing includes a mounting surface, the first wall protruding from the mounting surface, and the second wall being connected to a top end of the first wall.

In an optional technical solution of the disclosure, in a circumferential direction of the first through hole, the first walls are spaced apart, a limiting hole is provided between the two first walls, and the second limiting member is engaged with the limiting hole.

In an optional technical solution of the disclosure, the second housing is circumferentially provided with a plurality of first limiting members at intervals.

In an optional technical solution of the disclosure, the plug further includes a low-voltage pin, the low-voltage pin including a low-voltage terminal and an insulated third housing, the third housing being provided with an elastic third limiting member, an included angle β between the third limiting member and the first direction being an acute angle, the first housing being provided with a second through hole, a wall of the second through hole including a third wall extending in the first direction and a fourth wall extending in the second direction, and the third limiting member being engaged with the fourth wall.

In an optional technical solution of the disclosure, the low-voltage pin further includes a first sealing gasket, a plurality of third through holes being disposed on the first sealing gasket, the low-voltage terminal passing through the third through holes and being in interference fit with the third through holes, and an outer periphery of the first sealing gasket being in interference fit with the first housing.

The disclosure further provides an electrical connector, including a plug described above and a socket.

The disclosure further provides a battery pack, including a plug described above.

The disclosure further provides an electric device, including a plug described above.

### Brief Description of the Drawings

FIG. 1 is an exploded view of a plug;
FIG. 2 is a cross-sectional view of a socket;
FIG. 3 is a cross-sectional view of a plug;
FIG. 4 is a cross-sectional view showing a state in which the plug and the socket are plugged;
FIG. 5 is a partial enlarged view of FIG. 4;
FIG. 6 is a schematic diagram of a tail end of the plug;
FIG. 7 is an exploded view of a low-voltage pin; and
FIG. 8 is a partial enlarged view of FIG. 3.

### List of reference numerals

Plug 100;
   Insertion end 110;
   Tail end 120;
   First housing 130;
      First through hole 131;
         First wall 1311;
         Second wall 1312;
         Limiting hole 1313;
      Mounting surface 132;
      Second through hole 133;
         Third wall 1331;
         Fourth wall 1332;
   High-voltage pin 140;
      High-voltage terminal 141;
      Second housing 142;
         First limiting member 1421;
         Second limiting member 1422;
         First segment 1423;
         Second segment 1424;
   Low-voltage pin 150;
      Low-voltage terminal 151;
      Third housing 152;
         Third limiting member 1521;
         Fourth limiting member 1522;
      First sealing gasket 153;
Socket 200;
   Receptacle 210.

### Detailed Description of Embodiments

The optional implementations of the disclosure are described below with reference to the accompanying drawings. It should be understood by those skilled in the art that these implementations are only for explaining the technical principles of the disclosure and are not intended to limit the scope of protection of the disclosure.

It should be understood that, in the description of the disclosure, the terms that indicate the orientation or positional relationship, such as "distance", "width", "thickness", "upper", "lower", "left", "right", "inner" and "outer", are based on the orientation or positional relationship shown in the figures, which is merely intended to facilitate and simplify the description of the disclosure rather than indicating or implying that the device or element must have a particular orientation and be constructed and operated in a particular orientation, and therefore should not be construed as limiting the disclosure.

In the description of the disclosure, the terms "first", "second", "third" and "fourth" are used for descriptive purposes only, and cannot be construed as indicating or implying relative importance or implicitly indicating the number of technical features indicated. In the description of the disclosure, the phrase "a plurality of" means at least two, such as two, three, etc., unless otherwise specifically defined.

In addition, it should also be noted that, in the description of the disclosure, the terms "dispose" and "connect" should be interpreted in a broad sense unless explicitly defined and limited otherwise. For example, a connection may be a fixed connection, a detachable connection, or an integral connection; and may be a direct connection, an indirect connection by means of an intermediary, or internal communication between two elements. For those skilled in the art, the specific meaning of the above-mentioned terms in the disclosure can be interpreted according to the specific situation.

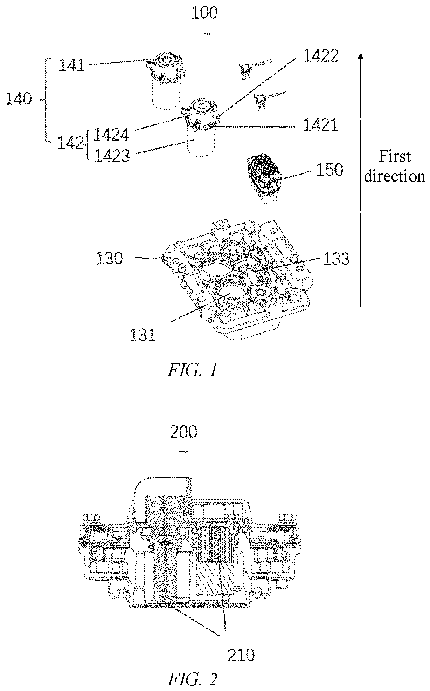

As shown in FIGS. 1-5, the disclosure provides a plug 100, the plug 100 including an insertion end 110 and a tail end 120, the insertion end 110 being configured to be inserted into a socket 200, and the direction from the insertion end 110 to the tail end 120 being a first direction. The plug 100 includes a first housing 130 and a high-voltage pin 140, the socket 200 includes a receptacle 210, and the plug 100 and the socket 200 achieve an electrical connection through the insertion of the high-voltage pin 140 into the receptacle 210. The high-voltage pin 140 is disposed in a first through hole 131 of the first housing 130. The high-voltage pin 140 includes a high-voltage terminal 141 and an insulated second housing 142, the high-voltage terminal 141 being disposed in the second housing 142. The second housing 142 is provided with a first limiting member 1421 and a second limiting member 1422, the first limiting member 1421 being an elastic member, and an included angle α between the first limiting member 1421 and the first direction being an acute angle. A wall of the first through hole 131 includes a first wall 1311 extending in the first direction and a second wall 1312 extending in a second direction. So when the high-voltage pin 140 is inserted from the tail end 120 to the insertion end 110 (i.e., the direction opposite to the first direction), under the pressing of the second wall 1312, the first limiting member 1421 serving as an elastic member converges toward the axial center of the high-voltage pin 140 to reduce α, and an elastic deformation is released when a top end of the first limiting member 1421 moves to a lower surface of the second wall 1312, so that the first limiting member is engaged with the lower surface of the second wall 1312, thereby limiting the movement in the first direction. The second limiting member 1422 is engaged with at least one of the first wall 1311 and the second wall 1312, thereby limiting the movement in a direction opposite to the first direction. Therefore, the high-voltage pin 140 and the first housing 130 may be separately prepared, and then the high-voltage pin 140 may be quickly mounted into the first housing 130, thereby simplifying the structure of the plug 100 and also improving the production efficiency.

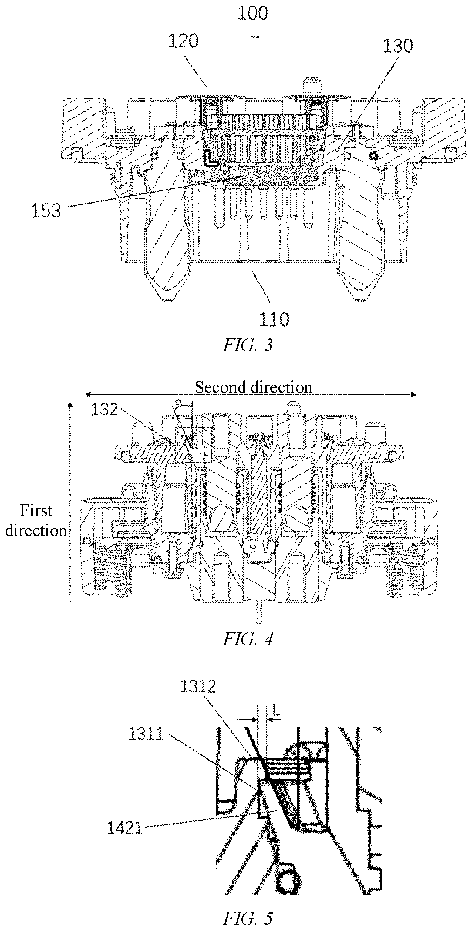

In an optional embodiment of the disclosure, as shown in FIGS. 3 and 5, the included angle α between the first limiting member 1421 and the first direction satisfies: 12° ≤ α ≤ 20°. If the value of α is too large, it is difficult for the high-voltage pin 140 to be inserted into the first through hole 131, and forcing the insertion may cause the first limiting member 1421 to break. If the value of α is too small, it is difficult to form an effective limiting function with the second wall 1312. Setting α within the above numerical range may ensure that the first limiting member 1421 deforms within an appropriate range and may effectively limit the movement of the high-voltage pin 140 in the direction opposite to the first direction. In particular, α may be 12°, 14°, 15°, 16°, 17°, 18°, or 20°.

In an optional embodiment of the disclosure, a joint between the second limiting member 1422 and the second housing 142 is closer to the tail end 120 than a joint between the first limiting member 1421 and the second housing 142. So when the high-voltage pin 140 is inserted from the tail end 120 to the insertion end 110, the second limiting member 1422 does not play a limiting role before the first limiting member 1421, ensuring that the first limiting member 1421 moves into engagement with the second wall 1312 before limiting.

In an optional embodiment of the disclosure, as shown in FIG. 1, the second housing 142 includes a first segment 1423 and a second segment 1424 connected in the first direction, the first segment 1423 having a diameter greater than the diameter of the second segment 1424, the first limiting member 1421 being connected to the first segment 1423, and the second limiting member 1422 being connected to the second segment 1424.

In an optional embodiment of the disclosure, a length L of the second wall 1312 in the second direction as shown in the figures satisfies: 0.7 mm ≤ L ≤ 1.5 mm. If the value of L is too large, the space allowing the high-voltage pin 140 to pass through becomes smaller, and the first limiting member 1421 needs to deform significantly to be inserted, which may damage the first limiting member 1421. If the value of L is too small, the limiting effect between the first limiting member 1421 and the second wall 1312 is not reliable. Limiting the value of L to the above numerical range allows the first limiting member 1421 to deform within an appropriate range while securely engaging the second wall 1312. Specifically, L may be 0.7 mm, 0.9 mm, 1.2 mm, 1.3 mm, or 1.5 mm.

In an optional embodiment of the disclosure, as shown in FIGS. 1 to 5, the first housing 130 includes a mounting surface 132, the first wall 1311 protruding from the mounting surface 132, and the second wall 1312 being connected to a top end of the first wall 1311. In a circumferential direction of the first through hole 131, the first walls 1311 are spaced apart, and a limiting hole 1313 is provided between the two first walls 1311. The first limiting member 1421 and the second limiting member 1422 are spaced apart in a circumferential direction of the second housing 142, i.e., the first limiting member 1421 is engaged under the second wall 1312 connected to the first wall 1311, the second limiting member 1422 adjacent to the first limiting member 1421 is directly engaged into the limiting hole 1313 between the two adjacent first walls 1311.

In an optional embodiment of the disclosure, the second housing 142 may be injection molded around the high-voltage terminal 141.

In an optional embodiment of the disclosure, as shown in FIGS. 1, 3, 7 and 8, the plug 100 further includes a low-voltage pin 150, the low-voltage pin 150 including a low-voltage terminal 151 and an insulated third housing 152, the third housing 152 being provided with an elastic third limiting member 1521, an included angle β between the third limiting member 1521 and the first direction being an acute angle, the first housing 130 being provided with a second through hole 133, a wall of the second through hole 133 including a third wall 1331 extending in the first direction and a fourth wall 1332 extending in the second direction, and the third limiting member 1521 being engaged with the fourth wall 1332. The low-voltage pin 150 is also provided with a fourth limiting member 1522, in this embodiment, the fourth limiting member 1522 is closer to the insertion end 110 than the third limiting member 1521, and the second through hole 133 is a stepped hole with an increasing diameter in the first direction. When the low-voltage pin 150 is inserted into the second through hole 133 and the third limiting member 1521 is pressed by the fourth wall 1332, the fourth limiting member 1522 has not yet abutted against a step of the stepped hole, so the low-voltage pin 150 is not restricted from continuing to be inserted. When the third limiting member 1521 moves to a lower surface of the fourth wall 1332, the third limiting member 1521 releases the elastic deformation to engage with the fourth wall 1332, acting to limit the upward movement of the low-voltage pin 150, and the fourth limiting member 1522 now moves into abutment with the step to limit the downward movement of the low-voltage pin 150. The range of values for the included angle β and the included angle α is the same and will not be described here. The length of the fourth wall 1332 and the second wall 1312 in the second direction is the same in the range of values and will not be described here.

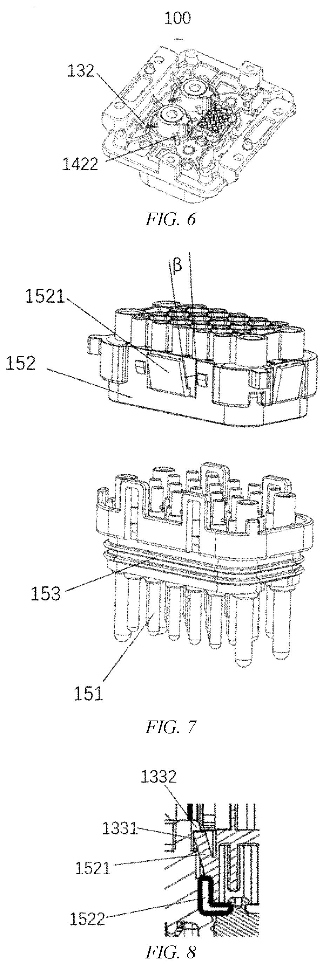

In an optional embodiment of the disclosure, as shown in FIGS. 3 and 7, the low-voltage pin 150 further includes a first sealing gasket 153 on which a plurality of third through holes (not shown) are provided, the low-voltage terminal 151 passes through the third through holes and is in interference fit with the third through holes, and an outer periphery of the first sealing gasket 153 is in interference fit with the first housing 130, thus sealing is achieved between a plurality of low-voltage terminals 151, and also between the plurality of low-voltage terminals 151 and the first housing 130. Specifically, a plurality of first protrusions (not shown) are provided in the third through holes, the low-voltage terminal 151 presses the protrusions when passing through the third through holes to achieve sealing, and the outer periphery of the first sealing gasket 153 is provided with a plurality of second protrusions, and the first sealing gasket 153 presses the second protrusions when assembled with the first housing 130 to achieve sealing.

In an optional embodiment of the disclosure, a high-voltage receptacle of the socket 200 corresponding to the high-voltage pin 140 and a low-voltage receptacle corresponding to the low-voltage pin 150 may also use a quick-assembly structure similar to that shown in FIG. 2, which will not be described here.

The disclosure further provides an electrical connector, including a plug described above and a socket.

The disclosure further provides a battery pack, including a plug described above.

The disclosure further provides an electric device, including a plug described above. That is, the plug may be provided on either of the battery pack and the electric device, and the corresponding socket on the other. The electric device may be an electric vehicle, etc.

Heretofore, the technical solutions of the disclosure have been described in conjunction with the optional implementations shown in the drawings, however, those skilled in the art can readily understand that the scope of protection of the disclosure is clearly not limited to these specific implementations. Those skilled in the art could make equivalent changes or substitutions to the related technical features without departing from the principles of the disclosure, and all the technical solutions after the changes or the substitutions fall within the scope of protection of the disclosure.

## Claims

1. A plug, which comprises an insertion end and a tail end, the insertion end being configured for connection with a socket, and the direction from the insertion end to the tail end being a first direction, the plug comprising a first housing and a high-voltage pin disposed in a first through hole of the first housing;
wherein the high-voltage pin comprises a high-voltage terminal and an insulated second housing, the high-voltage terminal being disposed in the second housing, the second housing being provided with a first limiting member and a second limiting member, the first limiting member being an elastic member, and an included angle α between the first limiting member and the first direction being an acute angle; and
a wall of the first through hole comprises a first wall extending in the first direction and a second wall extending in a second direction, the first limiting member being engaged with the second wall, and the second limiting member being engaged with at least one of the first wall and the second wall.

2. The plug of claim 1, wherein the included angle α between the first limiting member and the first direction satisfies: 12° ≤ α ≤ 20°.

3. The plug of claim 1 or 2, wherein a joint between the second limiting member and the second housing is closer to the tail end than a joint between the first limiting member and the second housing.

4. The plug of any of claims 1 to 3, wherein the second housing comprises a first segment and a second segment connected in the first direction, the first segment having a diameter greater than the diameter of the second segment, the first limiting member being connected to the first segment, and the second limiting member being connected to the second segment.

5. The plug of any of claims 1 to 4, wherein the second housing is injection molded.

6. The plug of any of claims 1 to 5, wherein a length L of the second wall satisfies: 0.7 mm ≤ L ≤ 1.5 mm.

7. The plug of any of claims 1 to 6, wherein the first housing comprises a mounting surface, the first wall protruding from the mounting surface, and the second wall being connected to a top end of the first wall.

8. The plug of any of claims 1 to 7, wherein in a circumferential direction of the first through hole, the first walls are spaced apart, a limiting hole is provided between the two first walls, and the second limiting member is engaged with the limiting hole.

9. The plug of any of claims 1 to 8, wherein the second housing is circumferentially provided with a plurality of first limiting members at intervals.

10. The plug of any of claims 1 to 9, wherein the plug further comprises a low-voltage pin, the low-voltage pin comprising a low-voltage terminal and an insulated third housing, the third housing being provided with an elastic third limiting member, and an included angle β between the third limiting member and the first direction being an acute angle; and the first housing is provided with a second through hole, a wall of the second through hole comprises a third wall extending in the first direction and a fourth wall extending in the second direction, and the third limiting member is engaged with the fourth wall.

11. The plug of claim 10, wherein the low-voltage pin further comprises a first sealing gasket, a plurality of third through holes being disposed on the first sealing gasket, the low-voltage terminal passing through the third through holes and being in interference fit with the third through holes, and an outer periphery of the first sealing gasket being in interference fit with the first housing.

12. An electrical connector, comprising a plug according to any one of claims 1 to 11.

13. A battery pack, comprising a plug according to any one of claims 1 to 11.

14. An electric device, comprising a plug according to any one of claims 1 to 11.
